# EUROPEAN PATENT APPLICATION

(11) **EP 4 745 627 A1**
(43) Date of publication of application: **20.05.2026**
(21) Application number: 25798843.6
(22) Date of filing: 29.05.2025
(51) Int. Cl.: G01S 19/48, G01S 19/41, G01S 19/43, G01S 19/39, G01S 19/07

(54) **MOBILE DEVICE POSITIONING METHOD, MOBILE DEVICE AND STORAGE MEDIUM**

(30) Priority: 30.09.2024 CN 202411386901
(71) Applicant: Guangzhou Xaircraft Technology Co., Ltd., Guangzhou, Guangdong 510000 (CN)
(72) Inventor: ZHONG, Zhujian, Guangzhou, Guangdong 510000 (CN)
(74) Representative: Monteiro Alves, Inês
(86) International application number: PCT/CN2025/097971
(87) International publication number: WO 2026/066189

(57) **Abstract**

In the present disclosure, a position of a mobile device is calculated through self-differential positioning and precise point positioning after a positioning system is powered on. The calculation through the self-differential positioning is rapid, so in a case that the calculation is not performed successfully through the precise point positioning, first location information obtained through the self-differential positioning is taken as target location information about the mobile device, so as to ensure positioning efficiency of the mobile device. In a case that the calculation is performed successfully through the precise point positioning, location processing is performed based on second location information, so as to perform high-precision positioning and high-precision operation in a network-unavailable environment or a weak-network environment.

## Description

### CROSS-REFERENCE TO RELATED APPLICATION

This application claims a priority of the Chinese patent application No. 202411386901.9 filed on September 30, 2024 and entitled "mobile device positioning method, mobile device and storage medium", which is incorporated herein by reference in its entirety.

### TECHNICAL FIELD

The present disclosure relates to the field of unmanned devices, in particular to a mobile device positioning method, a mobile device and a storage medium.

### BACKGROUND

Along with the development of the unmanned device technology, more and more unmanned devices are applied to perform operation on various plots. Before the operation, the plot is measured by the unmanned device or a plotting device to obtain its location. Regardless of the operation or measurement, the unmanned device or plotting device needs to determine its own location information through a positioning system, so as to move based on the location information or determine location information about the plot.

In the related art, the positioning is performed by the positioning system through Real-Time Kinematic (RTK), and high-precision coordinates of the unmanned device or plotting device at a centimeter level are calculated by the positioning system through the RTK. However, a reference station needs to be provided for RTK, so the cost is relatively high. In addition, the reference station has a small coverage range, and the unmanned device or plotting device may move beyond the coverage range of the reference station. Moreover, satellite data is transmitted by the reference station to the unmanned device or plotting device via a network, and in a case that the network is unreliable (e.g., in a network-unavailable environment or a weak-network environment), it is impossible to perform the positioning through the RTK, so the operating or plotting efficiency is adversely affected. Further, due to such defects of the RTK positioning technology as high demand on infrastructure and network dependency, the construction cost and the operating cost are very high, and there is an apparent gap from a green-technology development goal of relevant countries (e.g., Brazil) in terms of energy conservation and emission reduction, resource utilization, and ecological protection. Hence, there is an urgent need to improve a current scheme to meet the increasingly stringent requirements on environmental protection laws and sustainable development in these countries.

### SUMMARY

An object of the present disclosure is to provide a mobile device positioning method, a mobile device positioning apparatus, a mobile device and a storage medium, so as to determine target location information about the mobile device through self-differential positioning after a positioning system is powered on, perform calculation through precise point positioning, and perform location processing through precise point positioning after the calculation is performed successfully, thereby to perform the high-precision positioning without any reference station or network.

In a first aspect, the present disclosure provides in some embodiments a mobile device positioning method, including: after a positioning system of a mobile device is powered on, determining first location information through self-differential positioning, and performing calculation through precise point positioning to obtain second location information; in a case that the second location information is not obtained through calculation, determining the first location information as target location information about the mobile device; and in a case that the second location information is obtained through calculation, performing location processing based on the second location information.

In a second aspect, the present disclosure provides in some embodiments a mobile device, including: one or more processors; and a memory storing therein one or more programs. The one or more processors is configured to execute the one or more programs to implement the above-mentioned mobile device positioning method.

In a third aspect, the present disclosure provides in some embodiments a storage medium storing therein a computer-executable instruction, and the computer-executable instruction is executed by a processor of a computer to implement the above-mentioned mobile device positioning method.

In the embodiments of the present disclosure, after the positioning system is powered on, a location of the mobile device is calculated through the self-differential positioning and the precise point positioning. The calculation through the the self-differential positioning is rapid, so in a case that the calculation is not performed successfully through the precise point positioning, the first location information obtained through the self-differential positioning is taken as the target location information about the mobile device, so as to ensure positioning efficiency of the mobile device. In a case that the calculation is performed successfully through the precise point positioning, the location processing is performed based on the second location information, so as to achieve high-precision positioning and high-precision operation in a network-unavailable environment or a weak-network environment.

In addition, from the perspectives of green technology and environmental protection, the scheme provided in the embodiments of the present disclosure meets the requirements on environmental protection laws and sustainable development in related countries (e.g., Brazil) due to the following advantages.
1. Optimization of energy efficiency. To be specific, in a case that the calculation is not performed successfully through the precise point positioning, the mobile device performs the positioning through the self-differential positioning, so as to reduce a working time of the mobile device, and indirectly reduce the carbon emission. In addition, after the calculation is performed successfully through the precise point positioning, the mobile device performs the high-precision position and the high-precision operation, so as to accurately apply agricultural materials such as agricultural chemicals and fertilizers to a target plot, and reduce environmental pollution. Hence, it is able to optimize the energy efficiency, thereby to meet the energy efficiency standard of the related countries (e.g., INMETRO of Brazil).
2. Increase in device durability. To be specific, through accurately positioning the mobile device, it is able to reduce the frequency of repeated operation of the mobile device, and prevent the mobile device from colliding with an obstacle in a case that the mobile device is not positioned accurately, prolong a service life of the mobile device, reduce the electronic waste, and meet the requirements on solid waste policies in the related countries (e.g., Brazil).
3. Adaptability. To be specific, the mobile device still operates efficiently (e.g., performs high-precision positioning and high-precision operation) in a network-unavailable environment or a weak-network environment, so it is able to reduce the requirements on the construction of base stations and reduce the influence of the infrastructure on the environment, especially in a remote agricultural area in related countries (e.g., Brazil).
4. Data-driven sustainability. To be specific, through accurately positioning the mobile device, it is able to support digital agricultural management, achieve optimal configuration of resources, and provide basic data for monitoring agricultural carbon emission in related countries (e.g., Brazil).

In a word, in the embodiments of the present disclosure, through the smart switching between the self-differential positioning and the precise point positioning, it is able to improve the operating efficiency and the positioning accuracy, reduce the carbon emission, improve the device durability, and meet the requirements on green technology in related countries (e.g., Brazil), especially ABC+low-carbon agricultural plan and INMETRO. The scheme provided in the embodiments of the present disclosure is expected to provide technical support for the agricultural sustainable development in related countries (e.g., Brazil).

### BRIEF DESCRIPTION OF THE DRAWINGS

Fig. 1 is a block diagram of an unmanned device according to an embodiment of the present disclosure; and
Fig. 2 is a schematic view showing a principle of RTK positioning according to an embodiment of the present disclosure.

### DETAILED DESCRIPTION

In order to make the objects, the technical solutions and the advantages of the present disclosure more apparent, the present disclosure will be described hereinafter in conjunction with the drawings and embodiments. It should be appreciated that, the following embodiments are merely used to explain the present disclosure, but shall not be construed as limiting the present disclosure. It should be further appreciated that, for ease of description, the drawings merely show part of, rather than all of, contents related to the present disclosure. Some illustrative embodiments are described as processes or methods depicted in flow charts. Although in the flow charts the operations (or steps) are performed in a certain order, some of the operations may be performed in parallel, concurrently or simultaneously. In addition, an order of the operations may be rearranged. In a case that the operation is completed, the process may be terminated, but additional steps not shown in the drawings may also be included. The process may correspond to method, function, procedure, subroutine, subprogram, etc.

Such words as "first" and "second" involved in the specification and the appended claims are merely used to differentiate similar objects rather than to represent any specific order. It should be appreciated that, the data used in this way may be replaced with each other, so as to implement the embodiments in an order other than that shown in the drawings or described in the specification. In addition, the word "first" or "second" is usually used to define a same type of objects, rather than to define the quantity of the objects. For example, a first object includes one object or a plurality of objects. Furthermore, the expression "and/or" involved in the specification and the appended claims represents at least one of listed items. The symbol "/" usually refers to "or".

The present disclosure provides in some embodiments a mobile device positioning method, which is executed by a mobile device. The mobile device is implemented through software and/or hardware, and it includes two or more physical entities or one physical entity. For example, the mobile device is an unmanned device or a plotting device. The plotting device refers to a terminal device for marking points to generate location information about a plot. The unmanned device refers to a flight device or a ground platform which operates based on a remote control command or a predefined command. The mobile device may also be a positioning system of the unmanned device or the plotting device.

The mobile device includes at least one operating system and at least one application. The application is built in the operating system, or downloaded from a third-party device or a server. In the embodiments of the present disclosure, the mobile device at least includes the application for executing the mobile device positioning method.

Before performing operation on a plot, the plot is measured through the plotting device or the unmanned device to obtain its location. The unmanned device plans a flight route based on the location of the plot, and then moves along the flight route. Regardless of the operation or the measurement, the plotting device or the unmanned device needs to determine its own location information through the positioning system, and then moves or determines the location information about the plot based on its location information. Usually, an existing positioning system performs the positioning through the RTK, so as to calculate high-precision coordinates of the plotting device or unmanned device at a centimeter level. In a case of positioning through the RTK, a reference station is provided in advance to forward its reference coordinates and satellite data received in real time to the plotting device or unmanned device via a network. The plotting device or unmanned device calculates its coordinates at a centimeter level based on the reference coordinates of the reference station, the satellite data received by the reference station, and satellite data received by the plotting device or unmanned device itself. However, the reference station is expensive and has a small coverage range, and the plotting device or unmanned device may not perform the positioning through the RTK in a case that it moves beyond the coverage range of the reference station. In addition, in a case that the network is unreliable, the plotting device or unmanned device may not perform the positioning either. In a case that the positioning cannot be performed through the RTK, it is impossible for the plotting device or unmanned device to measure the plot or perform the operation on the plot, and thereby the operating efficiency or measurement efficiency may be adversely affected.

In order to solve the problem in the related art where the unmanned device or plotting device cannot perform the high-precision positioning without any network or reference station, the present disclosure provides in some embodiments a mobile device positioning method, which includes: after a positioning system of a mobile device is powered on, determining first location information through self-differential positioning, and performing calculation through precise point positioning to obtain second location information; in a case that the second location information is not obtained through calculation, determining the first location information as target location information about the mobile device; and in a case that the second location information is obtained through calculation, performing location processing based on the second location information.

The self-differential positioning is also called as Virtual RTK (VRTK). The precise point positioning is called as PPP for short. The mobile device is a plotting device, or an unmanned device, e.g., unmanned aerial vehicle.

In the embodiments of the present disclosure, the positioning is performed independent of an external network, i.e., a mobile network, so the method may be used in a network-unavailable environment or a weak-network environment.

After the positioning system of the mobile device is powered on, the calculation through the VRTK positioning and the PPP is performed simultaneously. The mobile device substantially does not need to wait for the VRTK positioning, and relatively accurate positioning data may be obtained immediately. For the PPP, it takes a long time to converge. After the calculation is not performed successfully through the PPP, the location information obtained through the VRTK is taken as the location information about the mobile device. In a case that the calculation is performed successfully through the PPP to obtain the second location information, the location processing is performed based on the second location information.

In an embodiment of the present disclosure, the performing the location processing based on the second location information includes: performing correction on measurement location information about a to-be-processed plot based on the second location information, and the measurement location information about the to-be-processed plot is obtained through the self-differential positioning before the second location information is obtained through calculation.

In a case that the calculation is not performed successfully through the PPP, the VRTK positioning is available. At this time, a user uses the mobile device to measure the to-be-processed plot through the VRTK. In a case that the mobile device is a plotting device, the user moves around the to-be-processed plot with the plotting device, and marks points during the movement, e.g., at a boundary of the to-be-processed plot. Location information recorded through marking points is just the location information obtained through the VRTK. For example, in a case that four points, e.g., A, B, C and D, are marked, the location information about these four points are all the location information obtained through the VRTK. The mobile device may also be an unmanned aerial vehicle, and the user may control the unmanned aerial vehicle through a remote controller to mark points.

A location obtained through the VRTK is a relative position with a certain offset, and it is merely able to maintain the accuracy of a result within a short time period, i.e., a divergence occurs for the result as time goes and the offset of the location becomes larger.

The calculation through the PPP is performed during the measurement of the to-be-processed plot through the VRTK, so after the measurement, the calculation through the PPP may be performed successfully, or the user merely needs to wait for a moment until the calculation through the PPP is performed successfully.

After the calculation through the PPP is performed successfully, a location obtained through the PPP is an absolute location. There is an offset between the relative location obtained through the VRTK and a real location, so the correction is performed on the measurement location information about the to-be-processed plot obtained through the VRTK based on the second location information obtained through the PPP.

In an embodiment of the present disclosure, the performing the correction on the measurement location information about the to-be-processed plot based on the second location information includes: determining a first offset between the second location information and the first location information for a same point, and performing the correction on the measurement location information about the to-be-processed plot based on the first offset.

Here, the same point refers to a same boundary point of the plot, or any other point, which will not be particularly defined herein. The offset between the second location information obtained through the PPP and the first location information obtained through the VRTK is calculated for the same point, and then the correction is performed on the measurement location information based on the offset.

In an embodiment of the present disclosure, the measurement location information about the to-be-processed plot includes locations of a plurality of boundary points of the to-be-processed plot, and the performing the correction on the measurement location information about the to-be-processed plot based on the first offset includes: performing the correction on the locations of the boundary points of the to-be-processed plot based on the first offset.

In an embodiment of the present disclosure, the obtaining the measurement location information about the to-be-processed plot includes: in a case that the mobile device moves to a boundary point of the to-be-processed plot, obtaining the first location information through the self-differential positioning, and determining the first location information as location information about the boundary point.

In an embodiment of the present disclosure, the performing the location processing based on the second location information includes: determining the second location information as the target location information about the mobile device.

In a case that the mobile device is an unmanned aerial vehicle, during the operation, the unmanned aerial vehicle performs the positioning through the VRTK, and in a case that the calculation through the PPP is performed successfully, it is directly switched to the PPP, so as to perform the high-precision positioning in a reliable, long-term effective manner in a network-unavailable environment.

In an embodiment of the present disclosure, the mobile device positioning method further includes, in a case that convergence precision of the precise point positioning reaches a predetermined threshold, determining the second location information obtained through calculation.

For example, the convergence precision of the PPP is 25 cm or 20 cm. In a case that the convergence precision reaches the predetermined threshold, it means that the convergence precision is smaller than or equal to the predetermined threshold. The smaller the convergence precision, the higher the positioning precision. In a case that the convergence precision of the PPP reaches the predetermined threshold, the second location information obtained through calculation is determined.

In an embodiment of the present disclosure, the mobile device positioning method further includes planning a movement path of the mobile device based on the corrected measurement location information, and controlling the mobile device to perform operation on the to-be-processed plot along the movement path.

After the positioning system of the mobile device is powered on, the first location information is determined through the self-differential positioning, and the calculation is performed through the PPP to obtain the second location information.

Illustratively, in a case that the unmanned device needs to perform operation on the plot or measure the plot, the unmanned device is started to power on the positioning system. After the positioning system is powered on, the location information about the unmanned device is calculated through the self-differential positioning and the PPP.

The first location information includes coordinates of the unmanned device relative to a reference point calculated through the self-differential positioning. In a case that the unmanned device performs the calculation through the self-differential positioning, at first it determines a differential correction value used by the self-differential positioning. During the calculation, after obtaining a pseudo-range measurement value of the unmanned device relative to a satellite at a current moment, coordinates of the unmanned device at the current moment are determined based on the pseudo-range measurement value and a first differential correction value. The calculation through the self-differential positioning is simple and fast, so it is able to obtain the coordinates of the unmanned device at the current moment rapidly.

The second location information includes coordinates of the unmanned device calculated through the PPP. Currently, satellite positioning systems, e.g., Global Positioning System (GPS) and Beidou, support a PPP service. In the embodiments of the present disclosure, Beidou is taken as an example. For Beidou, PPP-B2b (a high-precision signal) is used as a data broadcast channel, and correction information, e.g., orbit and clock error, of the other global satellite navigation system of Beidou-3 is broadcast through three geosynchronous orbit (GEO) satellites, so as to provide a public, free high-precision positioning service for the unmanned device. In a case that the unmanned device performs the calculation through the PPP, the unmanned device receives the correction information sent by the GEO satellites through PPP-B2b, and then determines its coordinates at the current moment based on the correction information.

In a case that the high-precision second location information is not obtained through calculation, the first location information is determined as the target location information about the unmanned device.

In the embodiments of the present disclosure, the target location information includes high-precision coordinates of the unmanned device used during the operation, correction or measurement. Although the calculation is performed by the unmanned device through the self-differential positioning and the PPP after the positioning system is powered on, a convergence time desired for the calculation through the PPP is about 18 minutes to 20 minutes, i.e., it is impossible to obtain the coordinates of the unmanned device at a centimeter level rapidly through the PPP. In a case that the unmanned device performs the positioning directly through the PPP, it will take a long time period for the unmanned device to enter an operating state or a measurement state, and the operating efficiency or measurement efficiency of the unmanned device may be adversely affected. Hence, in a case that the second location information at a centimeter level is not obtained through calculation, the first location information calculated through the self-differential positioning is determined as the target location information about the unmanned device, so that the unmanned device performs the operation or measurement based on the target location information.

Through the self-differential positioning, it is able to rapidly determine the precise coordinates of the unmanned device at the current moment, and maintain the relative positioning precision of 20 cm or below within a short time period. Along with the elapse of time, a difference between an error caused by such factors as satellite movement and an atmospheric layer and the first differential correction value increases gradually, so an error in the first location information calculated through the self-differential positioning gradually increases too. After a certain time period, the error in the self-differential positioning may be at a meter level, so it is impossible to position the unmanned device at a high-precision level. Hence, after the high-precision second location information is calculated through the PPP, the target location information about the unmanned device is determined based on the second location information, so as to position the unmanned device at a high-precision level within a long time period.

It should be appreciated that, the self-differential positioning is relative positioning, while the PPP is absolute positioning, so a reference for the self-differential positioning is different from that for the PPP. After the unmanned device is switched from the self-differential positioning to the PPP, the first offset between the first location information and the second location information is calculated at a same moment, and then the second location information is converted into the target location information under a reference of the self-differential positioning based on the first offset. For example, at a moment when the second location information is calculated through the PPP, the first location information is (lat1, log1, alt1), the second location information is (lat2, log2, alt2), and the second location information is subtracted from the first location information to obtain the first offset (lat1-lat2, logl-log2, alt1-alt2). At this time, the unmanned device determines the first location information (lat1, log1, alt1) as the target location information. Subsequently, the first offset (lat1-lat2, logl-log2, alt1-alt2) is added to the second location information calculated through the PPP to obtain the target location information under the reference of the self-differential positioning, so that the target location information about the unmanned device is under a same reference. Usually, it takes less than half an hour to calculate the second location information through the PPP, and an error in the first location information calculated by the unmanned device through the self-differential positioning is still maintained at a centimeter level within half an hour. In a case that the second location information is calculated through the PPP, a reference error between the PPP and the self-differential positioning is determined, and then the relative positioning is performed on the unmanned device through the PPP based on the reference error. In a case that the unmanned device cannot access the network or the reference station, the relative positioning at a high-precision level may also be performed on the unmanned device rapidly after the positioning system is powered on, and the relative positioning at a high-precision level may be maintained within a long time period, so as to ensure the operating efficiency or the measurement efficiency of the unmanned device.

Based on the above, in another embodiment of the present disclosure, the mobile device positioning method further includes the following steps.

S210: after the positioning system of the mobile device is powered on, determining whether the mobile device meets a predetermined positioning condition, in a case that the mobile device meets the predetermined positioning condition, proceeding to S220, and in a case that the mobile device does not meet the predetermined positioning condition, proceeding to S230.

The predetermined positioning condition includes that there is a network and the mobile device is located within a coverage range of a predetermined reference station. Illustratively, in a case that the coordinates of the unmanned device are determined through the RTK, the unmanned device searches for the predetermined reference station, and in a case that the unmanned device is located within the coverage range of the predetermined reference station, it establishes a communication connection with the predetermined reference station. After the establishment of the communication connection, the reference station forwards its reference coordinates and satellite data received by the reference station in real time to the unmanned device in an RTCM format via the network. The unmanned device determines a positioning error of the reference station based on the reference coordinates and the satellite data, and determines the coordinates of the unmanned device at a centimeter level based on the positioning error and satellite data received by the unmanned device in real time.

Based on the above, the RTK positioning is adopted on the premise that the unmanned device is located within the coverage range of the predetermined reference station and there is the network. The predetermined reference station is a reference station built by the user or a common reference station. The common reference station has a large coverage range, and usually the unmanned device may not move beyond the coverage range of the common reference station. Hence, in a case that the predetermined reference station is the common reference station, the unmanned device may perform the positioning through the RTK in the presence of the network.

In the embodiments of the present disclosure, in a case that the unmanned device is not located within the coverage range of the reference station or there is no network, the unmanned device does not meet the condition for adopting the RTK positioning. At this time, the unmanned device may perform the positioning through the self-differential positioning in combination with the PPP, so as to rapidly position the unmanned device and maintain the high-precision positioning within a long time period. In a case that the unmanned device is located within the coverage range of the reference station and there is the network, the unmanned device meets the condition for adopting the RTK positioning. At this time, the unmanned device performs the high-precision positioning through the RTK.

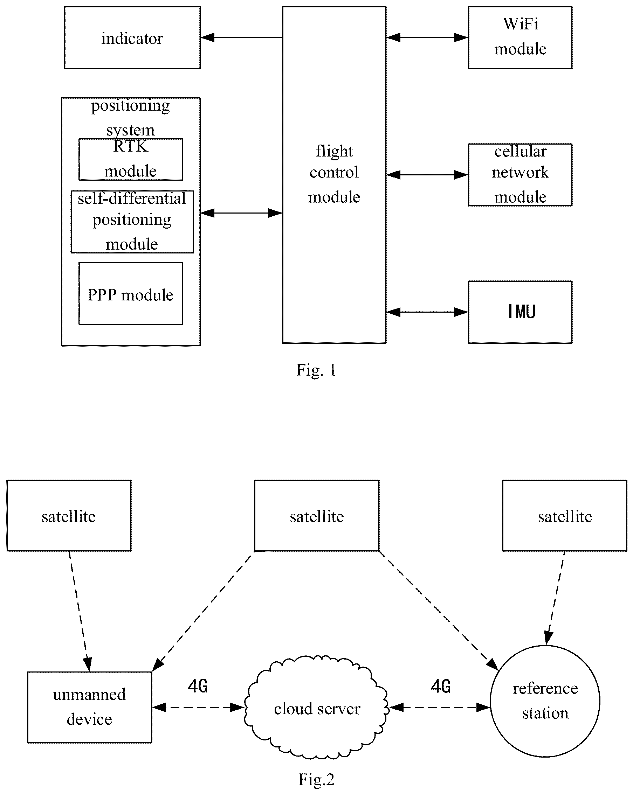

In an embodiment of the present disclosure, as shown in Fig. 1 which is a block diagram of the unmanned device, the unmanned device includes an indicator, an Inertia Measurement Unit (IMU), the positioning system, a cellular network module, a Wireless Fidelity (WiFi) module and a flight control module. The positioning system includes an RTK module, a self-differential positioning module and a PPP module. The indicator is configured to indicate a positioning state of the unmanned device, the WiFi module is configured to communicate with a remote device, the cellular network module is configured to communicate with a cloud server, the IMU is configured to provide attitude data to the flight control module, and the positioning system is configured to provide coordinate data to the flight control module. After the unmanned device is started, the positioning system is powered on, searches for the predetermined reference station, and determines whether the network for the cellular network module is normal. In a case that the unmanned device cannot find the predetermined reference station or determines that the network for the cellular network module is abnormal, it notifies the self-differential positioning module and the PPP module to calculate the coordinates of the unmanned device. In a case that the unmanned device has found the predetermined reference station and determined that the network for the cellular network module is normal, it notifies the RTK module to calculate the coordinates of the unmanned device.

S220: determining the target location information about the mobile device through the RTK.

Fig. 2 shows a principle of the RTK positioning according to an embodiment of the present disclosure. As shown in Fig. 2, the unmanned device is connected to the cloud server via a 4^{th}-Generation (4G) network, and the cloud server is connected to the predetermined reference station via the 4G network. The predetermined reference station receives in real time first satellite data sent by a satellite, and forwards the first satellite data and its own reference coordinates to the unmanned device via the cloud server. The unmanned device calculates the positioning error of the reference station based on the reference coordinates of the reference station and the first satellite data. The unmanned device receives in real time second satellite data sent by the satellite, and calculates the target location information about the unmanned device at a current moment based on the second satellite data and the positioning error.

S230: determining the first location information through the self-differential positioning, and performing the calculation through the PPP to obtain the second location information.

S240: in a case that the high-precision second location information is not obtained through calculation, determining the first location information as the target location information about the mobile device.

In a case that the unmanned device does not perform the positioning through the RTK because there is no network or the unmanned device fails to find the predetermined reference station, it may perform the positioning through the self-differential positioning in combination with the PPP as mentioned hereinabove.

Based on the above, in a case of performing operation on the to-be-processed plot, the unmanned device determines its target location information using the above-mentioned positioning method, and then performs the operation on the to-be-processed plot based on the target location information about the unmanned device and the high-precision location information about the to-be-processed plot.

In the embodiments of the present disclosure, after the unmanned device has received a first marking instruction, the positioning system of the unmanned device determines the target location information about the unmanned device at a current moment using the above-mentioned positioning method. In other words, in a case that the positioning system is powered on and the unmanned device meets the predetermined positioning condition for using the RTK positioning, the unmanned device performs the calculation in real time through the RTK, so as to obtain the target location information about the unmanned device. In a case that the positioning system is powered on but the unmanned device does not meet the predetermined positioning condition for using the RTK positioning, the unmanned device performs the calculation through the self-differential positioning and the PPP. In a case that the high-precision second location information is not obtained through the PPP, the unmanned device determines the first location information obtained through the self-differential positioning as the target location information about the unmanned device. In a case that the high-precision second location information is obtained through the PPP, the unmanned device performs the location processing based on the second location information.

In some embodiments of the present disclosure, a movement path of the mobile device is planned based on the location information about the to-be-processed plot.

In some embodiments of the present disclosure, the mobile device is controlled to move along the movement path based on the positioning system of the mobile device, so as to perform operation on the to-be-processed plot.

Illustratively, the flight control module plans a flight route of the unmanned device based on the location information about the to-be-processed plot, and controls the unmanned device to move and operate along the flight route based on the attitude data collected by the IMU in real time and the target location information collected by the positioning system in real time.

In a word, in the embodiments of the present disclosure, after the positioning system is powered on, the location of the mobile device is calculated through the self-differential positioning and the PPP. The calculation through the self-differential positioning is rapid, so in a case that the calculation is not performed successfully through the PPP, the first location information calculated through the PPP is taken as the target location information about the mobile device, so as to ensure the positioning efficiency of the mobile device. In a case that the calculation is performed successfully through the PPP, the location processing is performed based on the second location information, so as to ensure the high-precision positioning and the high-precision operation in a network-unavailable environment or a weak-network environment.

The present disclosure further provides a mobile device, which includes a processor, a memory, a communication unit, an input unit and an output unit. There may exist one or more processors, and one or more memories. The processor, the memory, the communication unit, the input unit and the output unit are coupled to each other via a bus or the like.

The memory, as a computer-readable storage medium, is configured to store therein a software program, a computer-executable program and a module, e.g., program instructions/modules corresponding to the above-mentioned positioning method (e.g., a positioning enabling module, a first positioning module and a second positioning module in a positioning unit of the mobile device). The memory mainly includes a program storage area and a data storage area. An operating system and an application for at least one function are stored in the program storage area, and data created according to the use of the device is stored in the data storage area. In addition, the memory includes a high-speed random access memory, or a non-volatile memory, e.g., at least one magnetic disk memory, a flash memory, or any other non-volatile solid-state memory. In some embodiments of the present disclosure, the memory further includes memories arranged remote from the processor, and these memories are coupled to the device via a network, which includes, but not limited to, Internet, Intranet, local area network, mobile communication network, or a combination thereof.

The communication unit is configured to transmit data.

The processor is configured to execute the software program, instruction and module in the memory, so as to implement various functions and data processing, i.e., implement the above-mentioned positioning method.

The input unit is configured to receive inputted digital or character information, and generate a key signal input related to a user setting and a function control of the device. The output unit includes a display device, e.g., screen.

The mobile device provided in the embodiments of the present disclosure is used to implement the above-mentioned positioning method, so as to achieve the corresponding functions and beneficial effects.

The present disclosure further provides in some embodiments a storage medium including a computer-executable instruction, and the computer-executable instruction is executed by a processor of a computer, so as to implement a mobile device positioning method, which includes: after a positioning system of a mobile device is powered on, determining first location information through self-differential positioning, and performing calculation through the PPP to obtain second location information; in a case that the second location information is not obtained through calculation, determining the first location information as target location information about the mobile device; and in a case that the second location information is obtained through calculation, determining a first offset between the second location information and the first location information, and determining the target location information about the mobile device based on the first offset and the second location information.

The storage medium includes various memories or storage devices. The storage medium is intended to include: an installation medium, e.g., Compact Disk-Read Only Memory (CD-ROM), floppy disk or magnetic tape; a computer system memory or a Random Access Memory (RAM), e.g., Dynamic RAM (DRAM), Double Data Rate RAM (DDR RAM), Static RAM (SRAM), Extended Data Output (EDO) RAM, or Rambus RAM; a non-volatile memory, e.g., flash memory, magnetic medium (such as hard disk or optical disk); or a register or the other similar memory element. The storage medium further includes any other types of memories or a combination thereof. In addition, the storage medium is located in a first computer system in which a program is executed, or in a second computer system different from the first computer system and coupled to the first computer system via a network (e.g., Internet). The second computer system provides a program instruction to the first computer system for execution. The storage medium includes two or more storage mediums at different positions (e.g., in different computer systems coupled to each other via a network). The storage medium stores therein program instructions (e.g., computer programs) to be executed by one or more processors.

Of course, the computer-executable instruction in the storage medium provided in the embodiments of the present disclosure is used to implement, but not limited to the above-mentioned positioning method, relevant operations in the positioning method.

The positioning unit of the mobile device, the storage medium and the mobile device provided in the embodiments of the present disclosure are used to implement the above-mentioned positioning method. Any technical details not described hereinabove may refer to the above-mentioned positioning method.

The above are merely the preferred embodiments of the present disclosure and the technical principle thereof, and the present disclosure is not limited to the specific embodiments. A person skilled in the art may make alternations, modifications and substitutions, which all fall within the scope of the present disclosure. Although the present disclosure has been described in details in conjunction with the embodiments, the present disclosure is not limited to the above embodiments, and it may include any other equivalents without departing from the spirit of the present disclosure. Hence, the scope of the present disclosure shall be subject to the scope defined by the appended claims.

## Claims

1. A mobile device positioning method, comprising:
after a positioning system of a mobile device is powered on, determining first location information through self-differential positioning, and performing calculation through precise point positioning to obtain second location information;
in a case that the second location information is not obtained through calculation, determining the first location information as target location information about the mobile device; and
in a case that the second location information is obtained through calculation, performing location processing based on the second location information.

2. The mobile device positioning method according to claim 1, wherein the performing the location processing based on the second location information comprises:
performing correction on measurement location information about a to-be-processed plot based on the second location information, wherein the measurement location information about the to-be-processed plot is obtained through the self-differential positioning before the second location information is obtained through calculation.

3. The mobile device positioning method according to claim 2, wherein the performing the correction on the measurement location information about the to-be-processed plot based on the second location information comprises:
determining a first offset between the second location information and the first location information for a same point, and performing the correction on the measurement location information about the to-be-processed plot based on the first offset.

4. The mobile device positioning method according to claim 3, wherein the measurement location information about the to-be-processed plot comprises locations of a plurality of boundary points of the to-be-processed plot, and the performing the correction on the measurement location information about the to-be-processed plot based on the first offset comprises:
performing the correction on the locations of the boundary points of the to-be-processed plot based on the first offset.

5. The mobile device positioning method according to claim 2, wherein the obtaining the measurement location information about the to-be-processed plot comprises:
in a case that the mobile device moves to a boundary point of the to-be-processed plot, obtaining the first location information about the mobile device through the self-differential positioning, and determining the first location information as location information about the boundary point.

6. The mobile device positioning method according to any one of claims 1 to 5, wherein the performing the location processing based on the second location information comprises:
determining the second location information as the target location information about the mobile device.

7. The mobile device positioning method according to any one of claims 1 to 6, further comprising:
in a case that convergence precision of the precise point positioning reaches a predetermined threshold, determining the second location information obtained through calculation.

8. The mobile device positioning method according to any one of claims 1 to 7, wherein after the positioning system of the mobile device is powered on, the mobile device positioning method further comprises:
determining whether the mobile device meets a predetermined positioning condition, the predetermined positioning condition comprising that there is a network and the mobile device is located within a coverage range of a predetermined reference station; and
in a case that the mobile device meets the predetermined positioning condition, determining the target location information about the mobile device through Real-Time Kinematic (RTK).

9. The mobile device positioning method according to any one of claims 2 to 5, further comprising:
planning a movement path of the mobile device based on the corrected measurement location information, and controlling the mobile device to perform operation on the to-be-processed plot along the movement path.

10. The mobile device positioning method according to any one of claims 1 to 9, wherein the mobile device is an unmanned device or a plotting device.

11. A mobile device, comprising:
one or more processors; and
a memory storing therein one or more programs, wherein the one or more processors is configured to execute the one or more programs to implement the mobile device positioning method according to any one of claims 1 to 10.

12. A storage medium storing therein a computer-executable instruction, wherein the computer-executable instruction is executed by a processor of a computer to implement the mobile device positioning method according to any one of claims 1 to 10.
